# EUROPEAN PATENT APPLICATION

(11) **EP 4 852 150 A1**
(43) Date of publication of application: **09.12.2026**
(21) Application number: 25904930.2
(22) Date of filing: 27.11.2025
(51) Int. Cl.: H01M 10/653, H01M 10/613, H01M 10/6554, H01M 10/658, H01M 10/42, H01M 50/204

(54) **COOLING ENHANCEMENT MODULE**

(30) Priority: 13.12.2024 KR 20240186512
(71) Applicant: LG Energy Solution, Ltd., Seoul 07335 (KR)
(72) Inventor: CHO, Youngil, Daejeon 34122 (KR)
(74) Representative: BCKIP Part mbB
(86) International application number: PCT/KR2025/019860
(87) International publication number: WO 2026/127455

(57) **Abstract**

The present invention provides a structure of a battery module including: a plurality of battery cells arranged in widthwise direction; a pad member(12) arranged in widthwise direction with the plurality of battery cells to form a cell stack; a housing accommodating the cell stack; and a thermally conductive resin connecting a bottom surface of the housing to that of the cell stack, wherein the pad member(12) includes a compressible layer and a thermally conductive layer stacked at two widthwise ends of the compressible layer, the thermally conductive layer including: an extending portion extending downward and inserted in the thermally conductive resin.

## Description

### [TECHNICAL FIELD]

This application claims the benefit of priority based on Korean Patent Application No. 10-2024-0186512 filed on December 13, 2024, entire content disclosed in the document of the patent applications is included as a part of this specification.

The present invention relates to a structure of a battery module with improved cooling.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices.

These secondary batteries are attracting attention as a new energy source for improving eco-friendliness and energy efficiency, not only because they have the primary advantage of being able to dramatically reduce the use of fossil fuels, but also because they do not generate any by-products due to energy use.

The types of secondary batteries widely used today include lithium ion batteries, lithium polymer batteries, nickel cadmium batteries, nickel hydrogen batteries and nickel zinc batteries. The operating voltage of these unit secondary batteries is approximately 2.5V to 4.2V. Therefore, when a higher output voltage is required, a battery pack is constituted by connecting multiple battery cells in series. In addition, a battery pack is constituted by connecting multiple battery cells in parallel according to the charge and discharge capacity required for the battery pack. Accordingly, the number of battery cells and the electrical connection structure of the battery pack may be selected in various ways according to the required output voltage or charge and discharge capacity.

Meanwhile, as a type of unit secondary battery cell, cylindrical, prismatic and pouch-type battery cells are known.

FIG. 1 illustrates a pouch-type battery cell. Referring to FIG. 1, a pouch-type battery cell 11 is manufactured by accommodating an electrode assembly in a pouch 110 formed by folding in half and sealing a sheet containing a metal material such as aluminum.

FIG. 2 illustrates a laminated structure of a cell stack. Referring to FIG. 2, a plurality of battery cells 11 are stacked to form a cell stack 1. The battery cells 11 within the cell stack 1 are connected in series and/or parallel to form a high-capacity and/or high-voltage battery module.

The cell stack 1 generally includes a compressible pad member 12 stacked with the battery cell 11. The pad member 12 is provided to absorb deformation caused by swelling of the battery cell 11, tolerances during the assembly process, and movement of the battery cell 11 due to impact. Additionally, a technology that blocks thermal propagation between battery cells 11 to prevent thermal runaway by manufacturing the pad member 12 with heat-resistance and thermal insulation properties is also widely used.

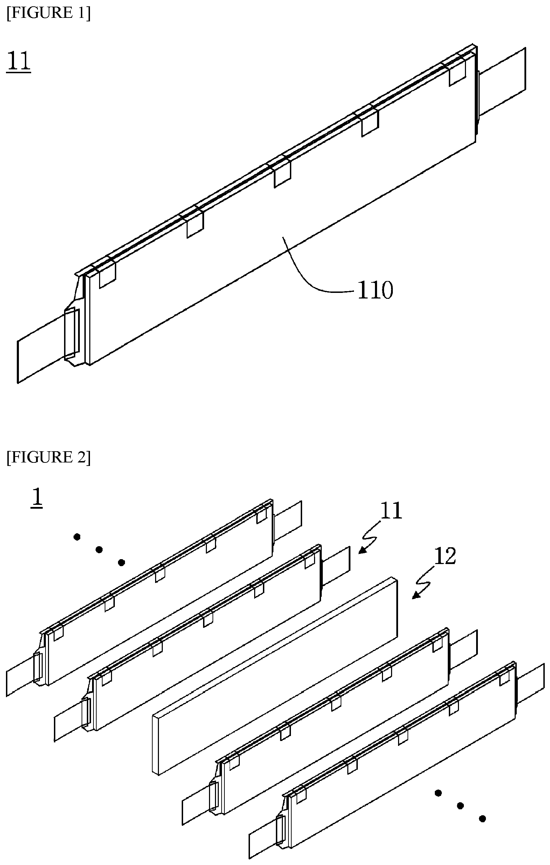

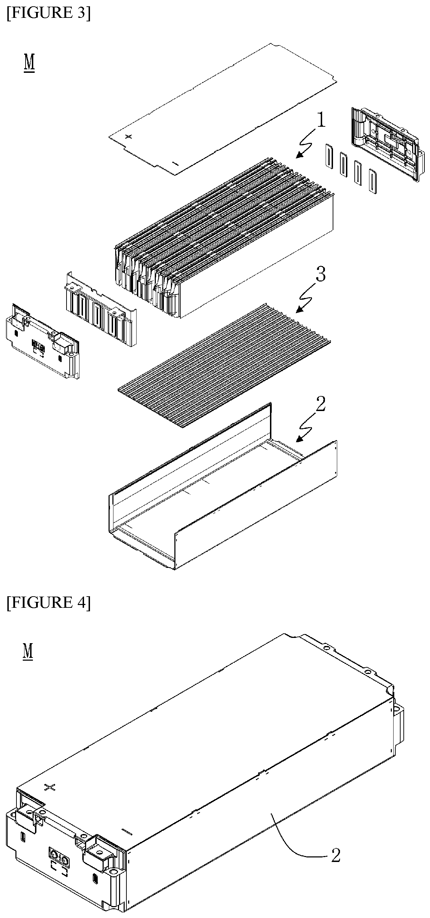

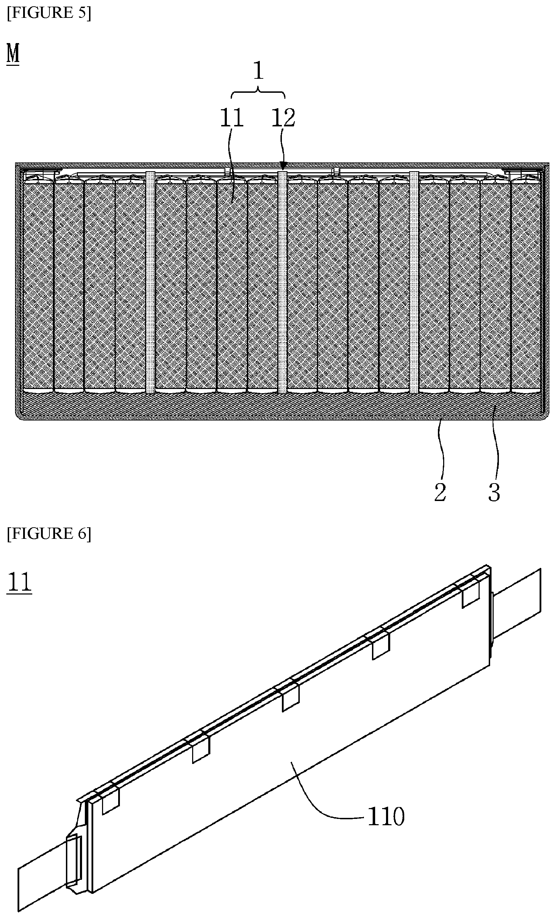

FIGS. 3 and 4 illustrate a battery module including the cell stack of FIG. 2, and FIG. 5 illustrates a cross-section of the battery module of FIG. 4. Referring to FIGS. 3 to 5, the cell stack 1 is generally accommodated in a housing 2 made of a lightweight metal material such as aluminum to constitute a battery module M.

Here, a thermally conductive resin 3 is interposed between the bottom surface of the housing 2 and the cell stack 1 to thermally and mechanically connect the cell stack 1 and the housing 2. Specifically, after the thermally conductive resin 3 is applied to the bottom surface of the housing 2, and the cell stack 1 is placed and thermally conductive resin 3 is then cured such that the cell stack 1 is firmly fixed to the housing 2 while simultaneously conducting heat absorbed from the cell stack 1 to the housing 2, thereby improving cooling of the cell stack 1.

Meanwhile, in order to accelerate the heat conduction between the thermally conductive resin 3 and the cell stack 1 to accelerate cooling of the cell stack 1, it is necessary that the contact area is increased. However, since the cell stack 1 and the thermally conductive resin 3 are only in contact with each other vertically, the contact area is not very large. Therefore, the development of a structure that increases the contact area without reducing the energy density of the battery module M is urgently necessary, but is challenging.

### [DISCLOSURE]

### [TECHNICAL PROBLEM]

In order to solve above-described problem of the prior art, it is an object of the present invention to provide a structure of a battery module with improved battery cell cooling efficiency.

Specifically, it is an object of the present invention to provide a structure of a battery module wherein heat generated from the battery cell is rapidly conducted to the outside through the housing.

It is another object of the present invention to provide a battery module with enhanced cooling and heat dissipation efficiency without increasing energy density.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a battery module including: a plurality of battery cells arranged in widthwise direction; a pad member arranged in widthwise direction with the plurality of battery cells to form a cell stack; a housing accommodating the cell stack; and a thermally conductive resin connecting a bottom surface of the housing to that of the cell stack.

It is preferable that the housing is made of a material with high thermal conductivity that facilitates the dissipation of heat generated by the battery cells. In order to achieve this, the housing may include a metal material. For example, the housing may include, at least in the bottom portion thereof, a material with high thermal conductivity, light weight and high strength such as aluminum.

The thermally conductive resin may be configured to be interposed between the cell stack and the bottom surface of the housing to connect the same by being applied to the housing and cured after the cell stack placed. As a result, the cell stack may be thermally and mechanically connected to the housing. However, the thermally conductive resin may alternatively be interposed to be in contact with both the cell stack and the housing simultaneously.

The battery module may further include a cooling member connected to the bottom surface of the housing and cooling the housing. Accordingly, heat conducted to the housing through the thermally conductive resin may be absorbed by the cooling member. The cooling member may be a heat-dissipating member with a large surface area to facilitate heat dissipation to the outside, or may be a heat-absorbing member configured to allow a refrigerant such as a coolant to flow or be stored therein. However, any member that is connected to the housing and capable of cooling the same is basically acceptable.

The pad member includes a compressible layer and a thermally conductive layer stacked at two widthwise ends of the compressible layer.

The compressible layer is configured to be compressible and elastically restorable such that deformation or displacement of the cell stack in the widthwise direction is absorbed. Specifically, the compressible layer may absorb thickness increases and tolerances due to swelling of the battery cells. In order to achieve this, it is preferable that the compressible layer include a compressible material compressible in the widthwise direction.

In addition, the compressible layer may include a porous material with thermal insulation properties so as to prevent thermal propagation by conduction between the battery cells.

According to an embodiment, the compressible layer may include a silicone resin material. The silicone resin may be heat-resistant and porous such that the silicone resin has compressibility in the widthwise direction and thermal insulation properties.

The thermally conductive layer may have high thermal conductivity and conduct heat generated from the battery cell to the housing through the thermally conductive resin.

For example, the thermally conductive layer may include a metal material. Here, it is preferable that the metal material has high thermal conductivity such as aluminum, copper, and/or an alloy containing the same.

According to an embodiment, the thermally conductive layer includes a graphite material. Since graphite materials have a chemical structure that includes multilayer grapheme so as to exhibit excellent thermal conductivity in vertical direction to the widthwise direction, graphite materials have the property of facilitating heat collection over a large area and transmit the same in the extending direction.

The thermally conductive layer includes: a contacting portion in contact with a surface of the plurality of battery cell; and an extending portion extending downward from the contacting portion and inserted in and connected to the thermally conductive resin. As the thermally conductive layer includes the extending portion, the thermally conductive layer may be in contact with the thermally conductive resin over a larger area such that heat from the battery cell is conducted to the thermally conductive resin more rapidly.

According to an embodiment, the extending portion may be in direct contact with the bottom surface of the housing. In such cases, heat generated from the battery cell may be transferred directly to the housing without necessarily passing through the thermally conductive resin. Specifically, in such cases, heat transferred through the thermally conductive layer may be rapidly and evenly transferred to both the thermally conductive resin and the housing.

According to an embodiment, the extending portion may extend further downward than a lower end portion of the compressible layer. Accordingly, the compressible layer may not impede thermal propagation in horizontal direction within the thermally conductive resin, and the heat absorbed by the thermally conductive resin may spread more evenly in the horizontal direction to rapidly lower the temperature. However, since the thermally conductive layer constitutes the outermost shell of the pad member, the contact area with the thermally conductive resin increases simply by extending into the thermally conductive resin. Therefore, alternatively, it is also possible for the compressible layer to extend and be inserted in the thermally conductive resin together with the thermally conductive layer.

According to an embodiment, at least a portion of the extending portion may extend in horizontal direction. As the extending portion extends horizontally, the contact area between the extending portion and the thermally conductive resin may be increased without increasing the height of the thermally conductive resin such that a battery module with excellent heat dissipation and cooling performance with high energy density may be provided.

In one embodiment, at least one pair of extending portions may be in contact with each other. That is, the extending portions may be configured to exchange heat with each other. Accordingly, the area over which the extending portions exchange heat with the thermally conductive resin increases, resulting in faster heat conduction.

According to an embodiment, the pad member may include a structure having a pad including the compressible layer and the thermally conductive layer folded in half such that the thermally conductive layer constitutes two outermost widthwise ends. By including such structure, it is advantageous in that the manufacturing of the pad member is facilitated and the structure of the required parts becomes simpler.

Here, it is preferable that the pad member is arranged with a bent portion thereof facing downward such that the contact area between the thermally conductive layer and the thermally conductive resin is increased.
According to an embodiment, the pad member may include a structure having a pair of pads including the compressible layer and the thermally conductive layer, the pair of pads stacked facing each other such that the thermally conductive layer constitutes two outermost widthwise ends. By including such structure, it is advantageous in that the manufacturing of the pad member is facilitated and the structure of the required parts becomes simpler.

The present invention provides a structure of a battery module including: a plurality of battery cells arranged in widthwise direction; a pad member arranged in widthwise direction with the plurality of battery cells to form a cell stack; a housing accommodating the cell stack; and a thermally conductive resin connecting a bottom surface of the housing to that of the cell stack, wherein the pad member includes: a compressible layer; a thermally insulating layer stacked at two widthwise ends of the compressible layer and a thermally conductive layer stacked at two widthwise ends of the thermally insulating layer.

The compressible layer is configured to be compressible and elastically restorable such that deformation or displacement of the cell stack in the widthwise direction is absorbed. Specifically, the compressible layer may absorb thickness increases and tolerances due to swelling of the battery cells. In order to achieve this, it is preferable that the compressible layer include a compressible material compressible in the widthwise direction.

In addition, the compressible layer may include a porous material with thermal insulation properties so as to prevent thermal propagation by conduction between the battery cells.

According to an embodiment, the compressible layer may include a silicone resin material. The silicone resin may be heat-resistant and porous such that the silicone resin has compressibility in the widthwise direction and thermal insulation properties.

The thermally insulating layer may include a thermally insulating material to prevent thermal propagation by radiation between battery cells. For example, the thermally insulating layer may include at least one material selected from the group consisting of metal, mica and ceramic.

The thermally conductive layer may have high thermal conductivity and conduct heat generated from the battery cell to the housing through the thermally conductive resin.

For example, the thermally conductive layer may include a metal material. Here, it is preferable that the metal material has high thermal conductivity such as aluminum, copper, and/or an alloy containing the same.

According to an embodiment, the thermally conductive layer includes a graphite material. Since graphite materials have a chemical structure that includes multilayer grapheme so as to exhibit excellent thermal conductivity in vertical direction to the widthwise direction, graphite materials have the property of facilitating heat collection over a large area and transmit the same in the extending direction.

The thermally conductive layer includes: a contacting portion in contact with a surface of the plurality of battery cell; and an extending portion extending downward from the contacting portion and inserted in and connected to the thermally conductive resin. As the thermally conductive layer includes the extending portion, the thermally conductive layer may be in contact with the thermally conductive resin over a larger area such that heat from the battery cell is conducted to the thermally conductive resin more rapidly.

According to an embodiment, the extending portion may be in direct contact with the bottom surface of the housing. In such cases, heat generated from the battery cell may be transferred directly to the housing without necessarily passing through the thermally conductive resin. Specifically, in such cases, heat transferred through the thermally conductive layer may be rapidly and evenly transferred to both the thermally conductive resin and the housing.

According to an embodiment, the extending portion may extend further downward than lower end portions of the compressible layer and/or the thermally insulating layer. Accordingly, the compressible layer and/or the thermally insulating layer may not impede thermal propagation in horizontal direction within the thermally conductive resin, and the heat absorbed by the thermally conductive resin may spread more evenly in the horizontal direction to rapidly lower the temperature. However, since the thermally conductive layer constitutes the outermost shell of the pad member, the contact area with the thermally conductive resin increases simply by extending into the thermally conductive resin. Therefore, alternatively, it is also possible for the compressible layer and/or the thermally insulating layer to extend and be inserted in the thermally conductive resin together with the thermally conductive layer.

According to an embodiment, at least a portion of the extending portion may extend in horizontal direction. As the extending portion extends horizontally, the contact area between the extending portion and the thermally conductive resin may be increased without increasing the height of the thermally conductive resin such that a battery module with excellent heat dissipation and cooling performance with high energy density may be provided.

In one embodiment, at least one pair of extending portions may be in contact with each other. That is, the extending portions may be configured to exchange heat with each other. Accordingly, the area over which the extending portions exchange heat with the thermally conductive resin increases, resulting in faster heat conduction.

According to an embodiment, the pad member may include a structure having a pad including the compressible layer, the thermally insulating layer and the thermally conductive layer folded in half such that the thermally conductive layer constitutes two outermost widthwise ends. By including such structure, it is advantageous in that the manufacturing of the pad member is facilitated and the structure of the required parts becomes simpler.

Here, it is preferable that the pad member is arranged with a bent portion thereof facing downward such that the contact area between the thermally conductive layer and the thermally conductive resin is increased.

According to an embodiment, the pad member may include a structure having a pair of pads including the compressible layer, the thermally insulating layer and the thermally conductive layer, the pair of pads stacked facing each other such that the thermally conductive layer constitutes two outermost widthwise ends. By including such structure, it is advantageous in that the manufacturing of the pad member is facilitated and the structure of the required parts becomes simpler.

### [ADVANTAGEOUS EFFECTS]

The present invention may provide a structure of a battery module provided with a thermally conductive layer in which a pad member is in contact with a thermally conductive resin over a large area such that heat generated from the battery cell is rapidly conducted to the outside through the housing, thereby improving cooling efficiency of battery cell.

The present invention is advantageous in that, in providing the above-described effects, rapid and economical manufacturing of the battery module is possible without increasing the energy density of the battery module by the commonality of components.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates a pouch-type battery cell.
FIG. 2 illustrates a laminated structure of a cell stack.
FIGS. 3 and 4 illustrate a battery module including the cell stack of FIG. 2, and FIG. 5 illustrates a cross-section of the battery module of FIG. 4.
FIG. 6 illustrates a battery cell according to an embodiment.

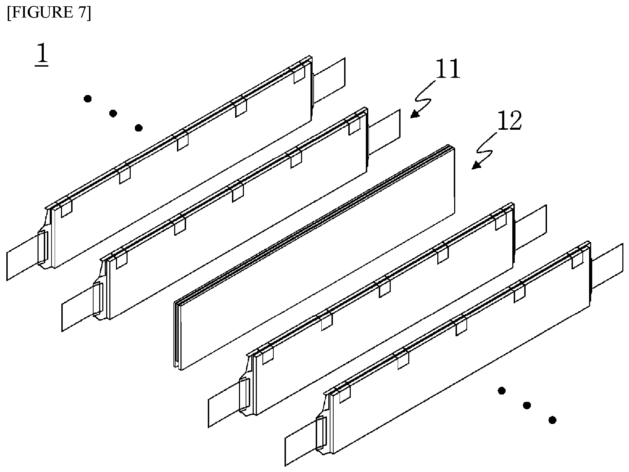

FIG. 7 illustrates a laminated structure of a cell stack according to an embodiment.

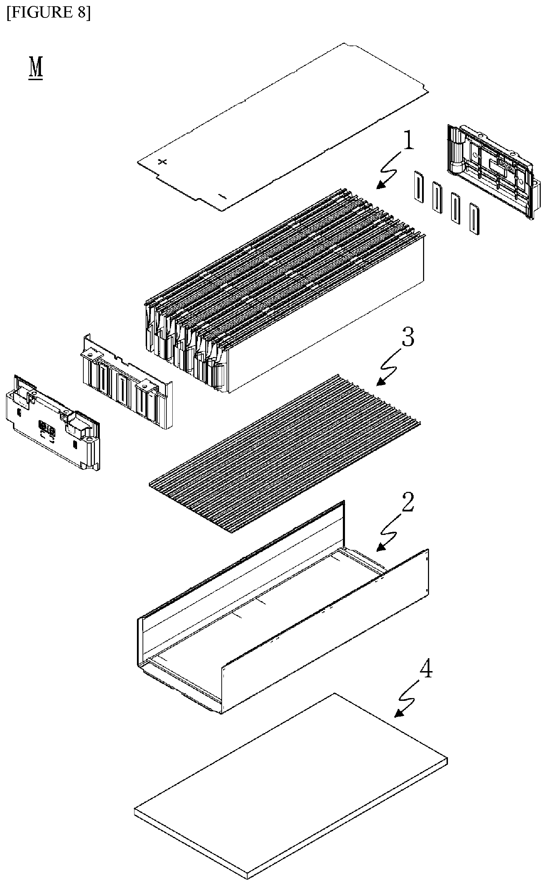

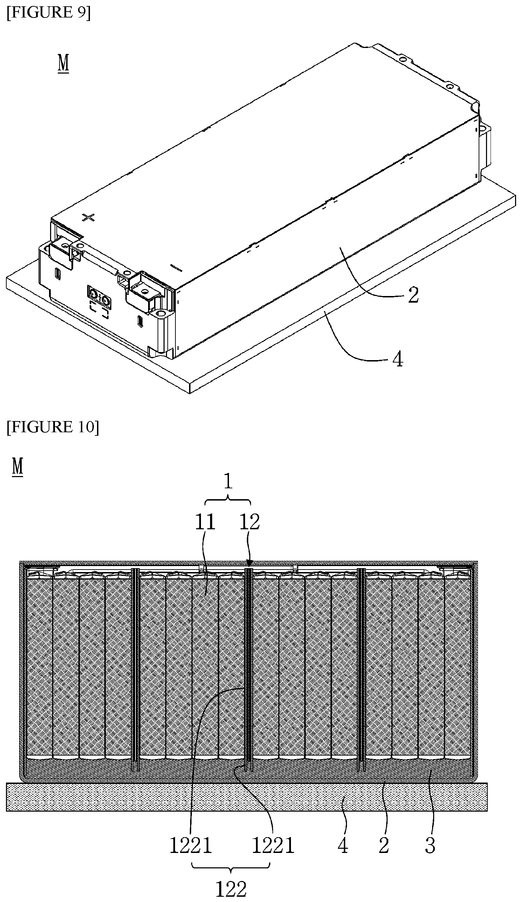

FIGS. 8 and 9 illustrate a battery module according to an embodiment.

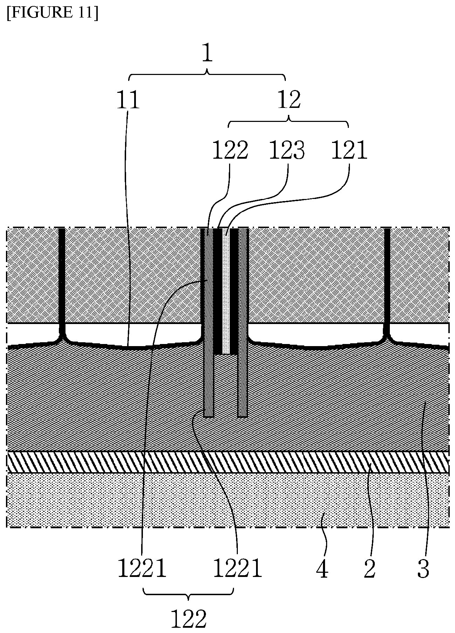

FIGS. 10 and 11 illustrate a cross-section and an essential portion thereof of a battery module according to a first embodiment.

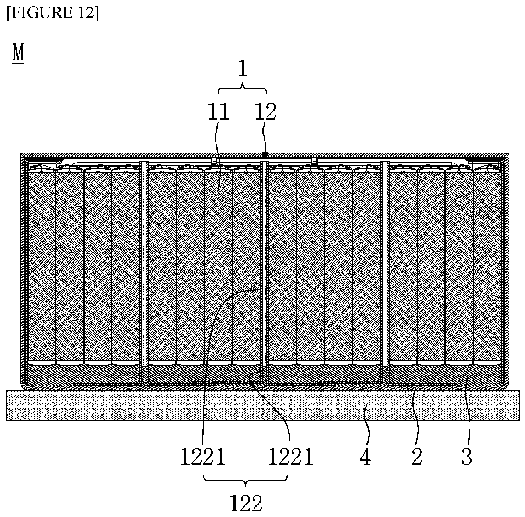

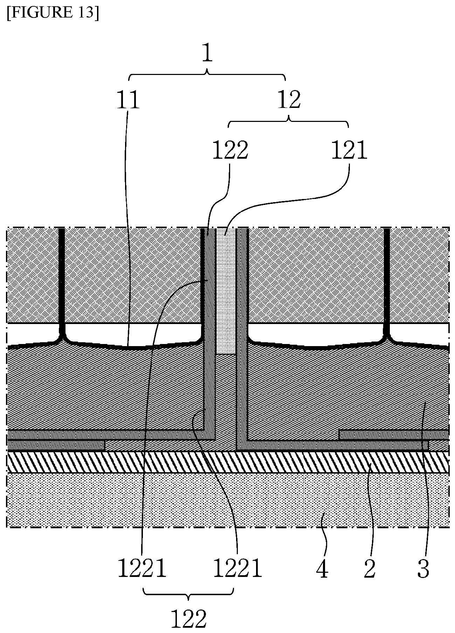

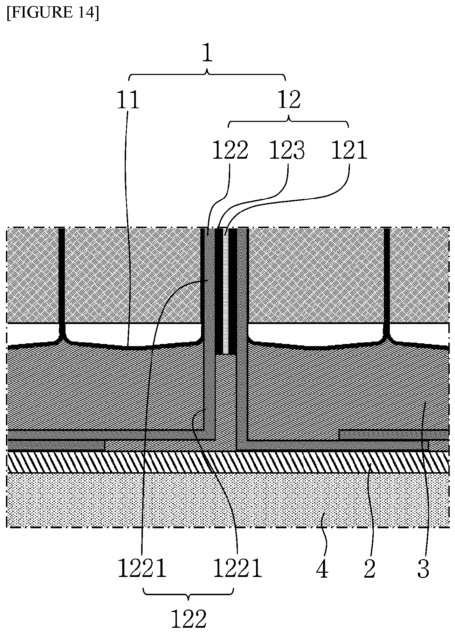

FIGS. 12 and 13 illustrate a cross-section and an essential portion thereof of a battery module according to a second embodiment, and FIG. 14 illustrates a modified example thereof.

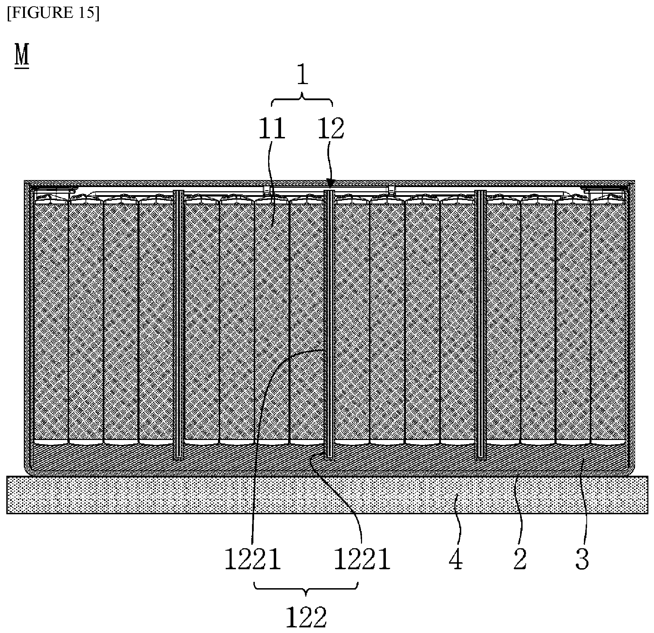

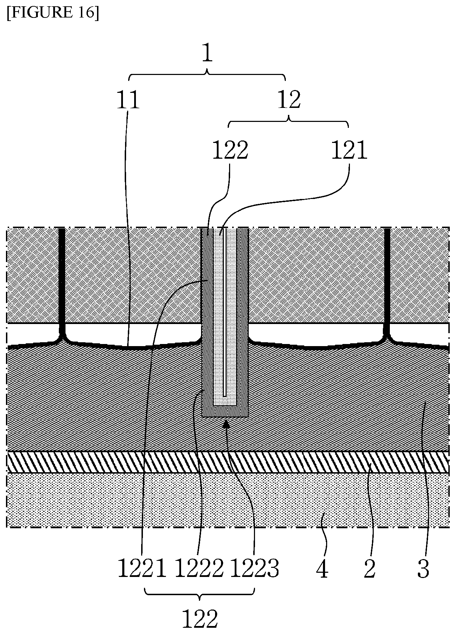

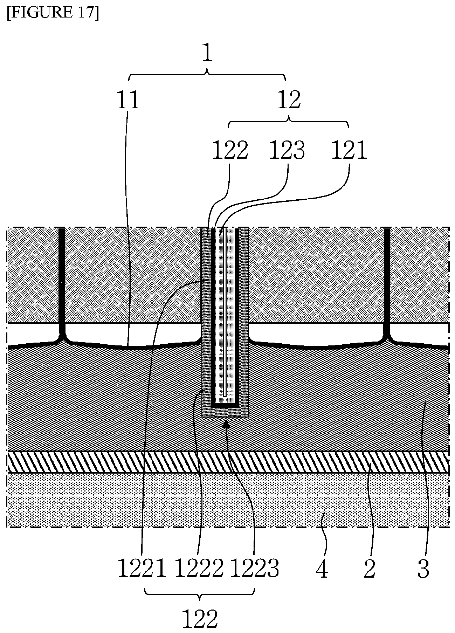

FIGS. 15 and 16 illustrate a cross-section and an essential portion thereof of a battery module according to a third embodiment, and FIG. 17 illustrates a modified example thereof.

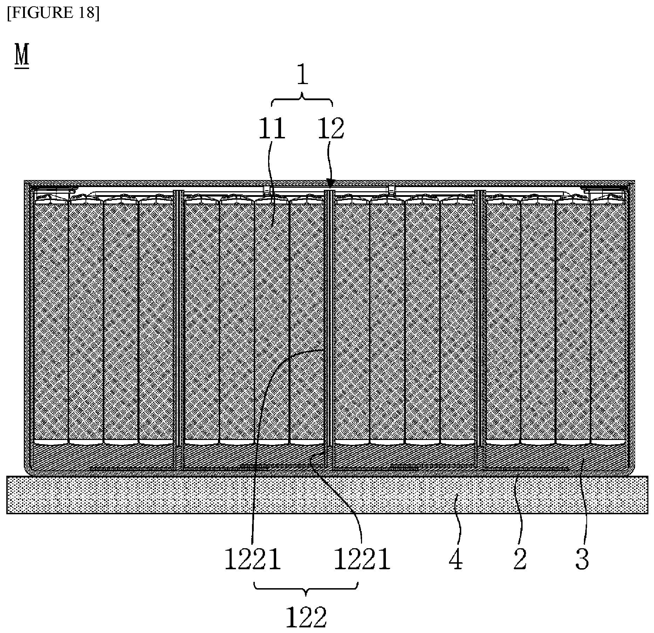

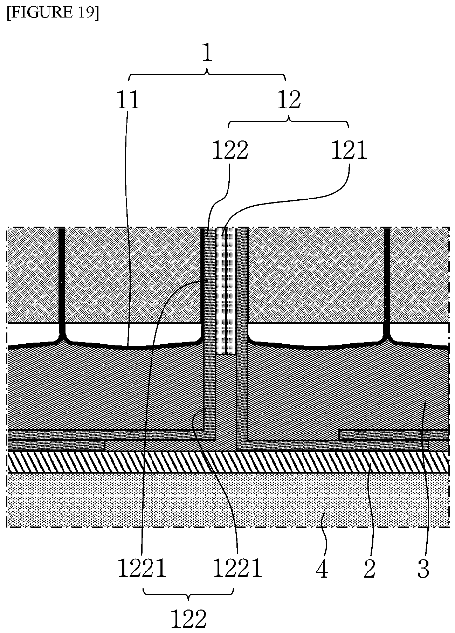

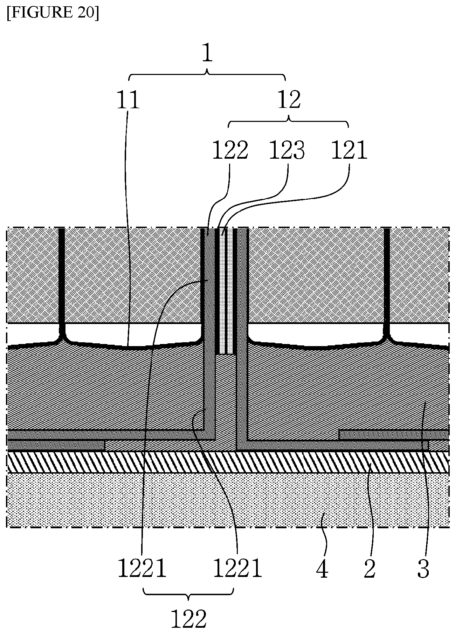

FIGS. 18 and 19 illustrate a cross-section and an essential portion thereof of a battery module according to a fourth embodiment, and FIG. 20 illustrates a modified example thereof.

### [DESCRIPTION OF REFERENCE NUMERALS]

1: cell stack
11: battery cell
110: pouch
12: pad member
121: compressible layer
122: thermally conductive layer
1221: contacting portion
1222: extending portion
1223: bent portion
123: thermally insulating layer
2: housing
3: thermally conductive resin
4: cooling member
M: battery module

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled to," or "in contact with" another element, it should be understood that the element may be "directly connected to," "directly coupled to," or "directly in contact with" another element, or the element may be "connected to," "coupled to," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Expressions indicating directions, including "up," "down," "left," and "right," used for convenience throughout the specification, should be interpreted as arbitrary directions defined independently of any absolute orientation, including the direction of gravity, and should not be construed as necessarily being orthogonal or parallel. For example, "upward" and "downward" refer to any pair of opposing directions, while "horizontal" here simply refers to any direction or directions intersecting the "upward" and "downward."

Hereinafter, preferred embodiments of the present invention will be described with reference to the accompanying drawings.

FIG. 6 illustrates a battery cell according to an embodiment. Referring to FIG. 6, a battery module according to an embodiment of the present invention accommodates a plurality of pouch-type battery cells 11.

Meanwhile, it is sufficient that the battery cells 11 are capable of being stacked to form a cell stack, as described below. The specific shapes and structures thereof may differ.

The battery cell 11 is typically manufactured by embedding a stacked electrode assembly in a pouch 110. However, the structure of the electrode assembly is irrelevant to the present invention.

While the pouch 110 may be formed by sealing a metal sheet folded in half, the material and structure are not limited thereto.

FIG. 7 illustrates a laminated structure of a cell stack according to an embodiment. Referring to FIG. 7, the battery cells 11 are stacked in a widthwise direction to form a cell stack 1. Here, pad members 12 are interposed between the battery cells 11 and are stacked together. While the battery cells 11 and pad members 12 are fixed to each other using adhesive or adhesive tape, the battery cells 11 and pad members 12 may be or may not be fixed using other methods and accommodated in a housing described below.

FIGS. 8 and 9 illustrate a battery module according to an embodiment. Referring to FIGS. 8 and 9, the cell stack 1 is accommodated in the housing 2 to constitute a battery module M.

While the housing 2 preferably comprises a lightweight metal material such as aluminum, the material thereof is not limited thereto. Meanwhile, the housing 2 preferably includes a material with high thermal conductivity to rapidly absorb heat from the cell stack 1 and dissipate the same to the outside.

A thermally conductive resin 3 is interposed between the bottom surface of the housing 2 and the cell stack 1. The thermally conductive resin 3 may include a resin material with high thermal conductivity and thermally and mechanically connects the cell stack 1 and the housing 2. Specifically, the thermally conductive resin 3 according to an embodiment is applied to the bottom surface of the housing 2 applied to the bottom surface of the housing 2, and the cell stack 1 is placed and thermally conductive resin 3 is then cured such that the cell stack 1 is firmly connected to the housing 2. Accordingly, heat generated in the battery cell 11 may be dissipated to the housing 2 through the thermally conductive resin 3 and to the outside through the housing 2. However, the thermally conductive resin 3 may be interposed in a different manner so as to be in contact with the cell stack 1 and the housing 2 simultaneously.

The battery module M according to an embodiment may further include a cooling member 4 connected to the bottom surface of the housing 2 and cooling the housing 2. Accordingly, heat conducted to the housing 2 through the thermally conductive resin 3 may be absorbed by the cooling member 4. The cooling member 4 may be a heat-dissipating member with a large surface area to facilitate heat dissipation to the outside, or may be a heat-absorbing member configured to allow a refrigerant such as a coolant to flow or be stored therein. However, any member that is connected to the housing 2 and capable of cooling the same is basically acceptable.

Hereinafter, with reference to FIGS. 10 and 11, common components of the first to fourth embodiments of the present invention will be described first.

FIGS. 10 and 11 illustrate a cross-section and an essential portion thereof of a battery module according to a first embodiment. Referring to FIG. 10 and 11, the pad member 12 includes a compressible layer 121 and a thermally conductive layer 122 stacked at two widthwise ends of the compressible layer 121.

The compressible layer 121 is configured to be compressible and elastically restorable such that deformation or displacement of the cell stack 1 in the widthwise direction is absorbed. Specifically, the compressible layer 121 may absorb thickness increases and tolerances due to swelling of the battery cells 11. In order to achieve this, it is preferable that the compressible layer 121 include a compressible material compressible in the widthwise direction.

In addition, the compressible layer 121 may include a porous material with thermal insulation properties so as to prevent thermal propagation by conduction between the battery cells 11.

According to each embodiment, the compressible layer 121 may include a silicone resin material. The silicone resin may be heat-resistant and porous such that the silicone resin has compressibility in the widthwise direction and thermal insulation properties.

The thermally conductive layer 122 may have high thermal conductivity and conduct heat generated from the battery cell 11 to the housing 2 through the thermally conductive resin 3.

For example, the thermally conductive layer 122 may include a metal material. Here, it is preferable that the metal material has high thermal conductivity such as aluminum, copper, and/or an alloy containing the same.

According to each embodiment, the thermally conductive layer 122 includes a graphite material. Since graphite materials have a chemical structure that includes multilayer grapheme so as to exhibit excellent thermal conductivity in vertical direction to the widthwise direction, graphite materials have the property of facilitating heat collection over a large area and transmit the same in the extending direction.

The thermally conductive layer 122 includes: a contacting portion in contact with a surface of the plurality of battery cell; and an extending portion 1222 extending downward from the contacting portion and inserted in and connected to the thermally conductive resin 3. As the thermally conductive layer 122 includes the extending portion 1222, the thermally conductive layer 122 may be in contact with the thermally conductive resin 3 over a larger area such that heat from the battery cell 11 is conducted to the thermally conductive resin 3 more rapidly.

Hereinafter, a first embodiment of the present invention will be described in detail with reference to FIGS. 10 and 11 again.

The pad member 12 according to the first embodiment includes: a compressible layer 121; a thermally insulating layer 123 stacked at two widthwise ends of the compressible layer 121; and a thermally conductive layer 122 stacked at two widthwise ends of the thermally insulating layer 123.

The thermally insulating layer 123 may include a thermally insulating material to prevent thermal propagation by radiation between battery cells 11. For example, the thermally insulating layer 123 may include at least one material selected from the group consisting of metal, mica and ceramic.

According to the first embodiment, the extending portion 1222 may extend further downward than lower end portions of the compressible layer 121 and/or the thermally insulating layer 123. Accordingly, the compressible layer 121 and/or the thermally insulating layer 123 may not impede thermal propagation in horizontal direction within the thermally conductive resin 3, and the heat absorbed by the thermally conductive resin 3 may spread more evenly in the horizontal direction to rapidly lower the temperature. However, since the thermally conductive layer 122 constitutes the outermost shell of the pad member 12, the contact area with the thermally conductive resin 3 increases simply by extending into the thermally conductive resin 3. Therefore, alternatively, it is also possible for the compressible layer 121 and/or the thermally insulating layer 123 to extend and be inserted in the thermally conductive resin 3 together with the thermally conductive layer 122.

Hereinafter, a second embodiment of the present invention will be described in detail with reference to FIGS. 12 to 14.

FIGS. 12 and 13 illustrate a cross-section and an essential portion thereof of a battery module according to a second embodiment. Referring to FIGS. 12 and 13, at least a portion of the extending portion 1222 according to the second embodiment extends in horizontal direction. As the extending portion 1222 extends horizontally, the contact area between the extending portion 1222 and the thermally conductive resin 3 may be increased without increasing the height of the thermally conductive resin 3 such that a battery module M with excellent heat dissipation and cooling performance with high energy density may be provided.

In the second embodiment, at least one pair of extending portions 1222 may be in contact with each other. That is, the extending portions 1222 may be configured to exchange heat with each other. Accordingly, the area over which the extending portions 1222 exchange heat with the thermally conductive resin 3 increases, resulting in faster heat conduction.

In addition, according to the second embodiment, the extending portion 1222 may be in direct contact with the bottom surface of the housing 2. In such cases, heat generated from the battery cell 11 may be transferred directly to the housing 2 without necessarily passing through the thermally conductive resin 3. Specifically, in such cases, heat transferred through the thermally conductive layer 122 may be rapidly and evenly transferred to both the thermally conductive resin 3 and the housing 2.

FIG. 14 illustrates a modified example of the second embodiment. Referring to FIG. 14, the pad member 12 according to the modified example includes: a compressible layer 121; a thermally insulating layer 123 stacked at two widthwise ends of the compressible layer 121; and a thermally conductive layer 122 stacked at two widthwise ends of the thermally insulating layer 123.

The thermally insulating layer 123 may include a thermally insulating material to prevent thermal propagation by radiation between battery cells 11. For example, the thermally insulating layer 123 may include at least one material selected from the group consisting of metal, mica and ceramic.

Hereinafter, a third embodiment of the present invention will be described in detail with reference to FIGS. 15 to 17.

FIGS. 15 and 16 illustrate a cross-section and an essential portion thereof of a battery module according to a third embodiment. Referring to FIG. 15 and 16, the pad member 12 according to the third embodiment includes a structure having a pad including the compressible layer 121 and the thermally conductive layer 122 folded in half such that the thermally conductive layer 122 constitutes two outermost widthwise ends. By including such structure, it is advantageous in that the manufacturing of the pad member 12 is facilitated and the structure of the required parts becomes simpler.

Here, it is preferable that the pad member 12 is arranged with a bent portion 1223 thereof facing downward such that the contact area between the thermally conductive layer 122 and the thermally conductive resin 3 is increased.

FIG. 17 illustrates a modified example of the third embodiment. Referring to FIG. 17, the pad member 12 according to the modified example includes: a compressible layer 121; a thermally insulating layer 123 stacked at two widthwise ends of the compressible layer 121; and a thermally conductive layer 122 stacked at two widthwise ends of the thermally insulating layer 123.

The thermally insulating layer 123 may include a thermally insulating material to prevent thermal propagation by radiation between battery cells 11. For example, the thermally insulating layer 123 may include at least one material selected from the group consisting of metal, mica and ceramic.

Here, the pad member 12 may include a structure having a pad including the compressible layer 121, the thermally insulating layer 123 and the thermally conductive layer 122 folded in half such that the thermally conductive layer 122 constitutes two outermost widthwise ends. By including such structure, it is advantageous in that the manufacturing of the pad member 12 is facilitated and the structure of the required parts becomes simpler.

Here, it is preferable that the pad member 12 is arranged with a bent portion 1223 thereof facing downward such that the contact area between the thermally conductive layer 122 and the thermally conductive resin 3 is increased.

Hereinafter, a fourth embodiment of the present invention will be described in detail with reference to FIGS. 18 to 20.

FIGS. 18 and 19 illustrate a cross-section and an essential portion thereof of a battery module according to a fourth embodiment. Referring to FIGS. 18 and 19, the pad member 12 according to the fourth embodiment may include a structure in which a pair of pads, each including the compressible layer 121 and the thermally conductive layer 122, are stacked facing each other such that the thermally conductive layer 122 constitutes two outermost widthwise ends. By including such structure, it is advantageous in that the manufacturing of the pad member 12 is facilitated and the structure of the required parts becomes simpler.

FIG. 20 illustrates a modified example the fourth embodiment. Referring to FIG. 20, the pad member 12 according to the modified example includes: a compressible layer 121; a thermally insulating layer 123 stacked at two widthwise ends of the compressible layer 121; and a thermally conductive layer 122 stacked at two widthwise ends of the thermally insulating layer 123.

The thermally insulating layer 123 may include a thermally insulating material to prevent thermal propagation by radiation between battery cells 11. For example, the thermally insulating layer 123 may include at least one material selected from the group consisting of metal, mica and ceramic.

Here, the pad member 12 may include a structure in which a pair of pads, each including the compressible layer 121, the thermally insulating layer 123 and the thermally conductive layer 122 , are stacked facing each other such that the thermally conductive layer 122 constitutes two outermost widthwise ends. By including such structure, it is advantageous in that the manufacturing of the pad member 12 is facilitated and the structure of the required parts becomes simpler.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module comprising:
a plurality of battery cells arranged in widthwise direction;
a pad member arranged in widthwise direction with the plurality of battery cells to form a cell stack;
a housing accommodating the cell stack; and
a thermally conductive resin connecting a bottom surface of the housing to that of the cell stack,
wherein the pad member comprises a compressible layer and a thermally conductive layer stacked at two widthwise ends of the compressible layer,
the thermally conductive layer comprising:
a contacting portion in contact with a surface of the plurality of battery cell; and
an extending portion extending downward from the contacting portion and inserted in and connected to the thermally conductive resin.

2. The battery module of claim 1, wherein the compressible layer comprises a compressible material compressible in the widthwise direction.

3. The battery module of claim 1, wherein the compressible layer comprises a porous material with thermal insulation properties.

4. The battery module of claim 1, wherein the thermally conductive layer comprises a metal material or a graphite material.

5. The battery module of claim 1, further comprising a cooling member connected to the bottom surface of the housing and cooling the housing.

6. The battery module of claim 1, wherein the extending portion is in direct contact with the bottom surface of the housing.

7. The battery module of claim 1, wherein the extending portion extends further downward than a lower end portion of the compressible layer.

8. The battery module of claim 1, wherein at least a portion of the extending portion extends in horizontal direction.

9. The battery module of claim 7, wherein at least one pair of extending portions are in contact with each other.

10. The battery module of claim 1, wherein the pad member comprises a structure having a pad comprising the compressible layer and the thermally conductive layer folded in half such that the thermally conductive layer constitutes two outermost widthwise ends.

11. The battery module of claim 10, wherein the pad member is arranged with a bent portion thereof facing downward.

12. The battery module of claim 1, wherein the pad member comprises a structure having a pair of pads comprising the compressible layer and the thermally conductive layer, the pair of pads stacked facing each other such that the thermally conductive layer constitutes two outermost widthwise ends.

13. A battery module comprising:
a plurality of battery cells arranged in widthwise direction;
a pad member arranged in widthwise direction with the plurality of battery cells to form a cell stack;
a housing accommodating the cell stack; and
a thermally conductive resin connecting a bottom surface of the housing to that of the cell stack,
wherein the pad member comprises: a compressible layer; a thermally insulating layer stacked at two widthwise ends of the compressible layer and comprising at least one material selected from a group consisting of metal, mica and ceramic; and a thermally conductive layer stacked at two widthwise ends of the thermally insulating layer,
the thermally conductive layer comprising:
a contacting portion in contact with a surface of the plurality of battery cell; and
an extending portion extending downward from the contacting portion and inserted in the thermally conductive resin.

14. The battery module of claim 13, wherein the extending portion is in direct contact with the bottom surface of the housing.

15. The battery module of claim 13, wherein the extending portion extends further downward than at least one of lower end portions of the compressible layer and the thermally insulating layer.

16. The battery module of claim 13, wherein at least a portion of the extending portion extends in horizontal direction.

17. The battery module of claim 16, wherein at least one pair of extending portions are in contact with each other.

18. The battery module of claim 13, wherein the pad member comprises a structure having a pad comprising the compressible layer, the thermally insulating layer and the thermally conductive layer folded in half such that the thermally conductive layer constitutes two outermost widthwise ends.

19. The battery module of claim 18, wherein the pad member is arranged with a bent portion thereof facing downward.

20. The battery module of claim 13, wherein the pad member comprises a structure having a pair of pads comprising the compressible layer, the thermally insulating layer and the thermally conductive layer, the pair of pads stacked facing each other such that the thermally conductive layer constitutes two outermost widthwise ends.
